# EUROPÄISCHE PATENTSCHRIFT

(11) **EP 0 811 764 B1**
(45) Veröffentlichungstag und Bekanntmachung des Hinweises auf die Patenterteilung: **17.05.2000**
(21) Anmeldenummer: 97108891.9
(22) Anmeldetag: 03.06.1997
(51) Int. Cl.: F03D 1/00, F03D 11/02, F03D 9/00

(54) **Getriebe-Generator-Kombination für Windkraftanlage**
Gearbox-generator combination for wind turbine
Combinaison réducteur-générateur pour eolienne

(30) Priorität: 03.06.1996 DE 29609794 U
(43) Veröffentlichungstag der Anmeldung: 10.12.1997
(73) Patentinhaber: aerodyn Engineering GmbH, 24768 Rendsburg (DE)
(72) Erfinder: Siegfriedsen,Sönke, D-24811 Owschlag (DE)
(74) Vertreter: Biehl, Christian, Dipl.-Phys.

(56) Entgegenhaltungen:
- EP-A- 0 093 461
- WO-A-96/11338
- DE-A- 3 402 015
- DE-A- 3 625 840
- DE-B- 1 104 458
- US-A- 4 291 233
- US-A- 4 488 053
- US-A- 4 585 949
- US-A- 4 774 855
- US-A- 4 871 923

## Beschreibung

Die Erfindung betrifft eine Verwendung eines Schiffswellengenerators in einer Windkraftanlage des Megawatt-Bereichs.

Bei Anlagen im Megawatt-Bereich, die vorzugsweise offshore, d.h. mit einer Entfernung zur Küste in den Meeren aufgestellt werden sollen, werden besonders wartungsarme, leichte und gegen Seewassereinwirkung geschützte Anlagen benötigt. Um Gewicht zu sparen und auch die Abmessungen möglichst gering zu halten, wird eine möglichst kompakte Anordnung des Antriebsstrangs gewünscht. Gleichzeitig sollen möglichst kostengünstig vorhandene Generatoren eingesetzt werden können.

Aus der WO-A-96 11 338 ist bereits ein Planetengetriebe für eine Windturbine bekannt, die zwei Getriebestufen aufweist, und bei der der Planetenträger der ersten antriebsseitigen Getriebestufe gleichzeitig die Antriebswelle für das Getriebe bildet, an dem die Rotornabe befestigt ist. Die Antriebswelle dient als Innenring des Rotorlagers, das weiter einen Außenring aufweist, der mit dem Gehäuse des Getriebes verschraubt ist, das ein Hohlrad der ersten Getriebestufe trägt, so daß der Außenring Teil des antriebsseitigen Gehäusedeckels des Getriebes wird.

Obwohl angestrebt wird, die Kosten und Gewicht eines Maschinensatzes bei einer Windkraftanlage zu verringern, wird ein Planetengetriebe mit zwei Planetenradstufen eingesetzt, wobei die Rotorwelle mittels zweier Lager in einem eigens dafür vorgesehenen Lagerbock gelagert ist.

Weiter wird in dieser Druckschrift vorgeschlagen, ein Getriebegehäuse zu verwenden, das die Lagerung der Rotorwelle übernimmt und entsprechend massiv ausgebildet ist. Zur notwendigen Schwingungs- und Schallentkopplung werden zudem noch Dämmmaterial-Einsätze am Gehäuse und am Planetenträger vorgesehen.

Derartige Anlagen sind zudem über eine Ringlagerung mit dem Turm verbunden, da die Eigensteifigkeit der Anlage bei Einsparung von Gewicht keine punktuelle Lagerung des Gewichtes erlaubt. Eine Ringlagerung jedoch ist vergleichsweise wartungsintensiv oder schwer, insbesondere dann, wenn sie mit fettgeschmierten Kugellagern realisiert ist.

Weiter ist bereits aus der DE-A-34 02 015 eine Wellengeneratoranlagen für Schiffe bekannt, bei der ein Planetenträger eines Planetenübertragungsgetriebes, dessen Sonnenrad mit dem Wellengenerator verbunden ist, und dessen Hohlrad über eine elektrische Maschine drehzahlgeregelt antreibbar ist, vom Haupt-Dieselgenerator über die Propellerwelle des Schiffes angetrieben wird.

Weiter sind hierzu als Stand der Technik zu nennen : z.B. die aus der WO 94/29614 bekannte für Propellersysteme entwickelte Vorrichtung; die aus der DE-A1-42 24 228 bekannte Windkraftanlage mit Hohlwelle und Zahnkupplung; der aus der DD 268 741 bekannte 'Windenergiekonverter' der in einfacher Bauart einen schnell laufenden Generator mit zentraler Stellstange in einer Kanzel kombinert; und die in der DE-A1-36 25 840 beschriebene Windkraftanlage, bei der ein relativ aufwendiges (und daher wartungsintensiveres) zweistufiges Getriebe vorhanden ist.

Bei den oben genannten bekannten Windenergieanlagen, die über Getriebe mit meist drei Getriebestufen verfügen (also Übersetzungen von 30 bis ca. 150 realisieren), sind viele schnellaufende Teile wie Lager, Zahnräder und Dichtungen vorhanden, die trotz vieler Fortschritte in der Werkstofftechnik noch unter den schon früher erkannten Problemen von hohem Verschleiß, Gewichtserhöhung und Dichtungsproblemen litten.

Dagegen besteht bei direkt getriebenen, also getriebelosen Anlagen der Megawattklasse das Problem, die dadurch erforderlich werdenden Durchmesser der Generatoren von 5 - 6 m mechanisch stabil zu lagern. Außerdem ist eine Abschirmung gegen Umwelteinflüsse fast nicht möglich, so daß die Generatorwicklungen damit beaufschlagt werden und ein frühzeitiger Defekt wahrscheinlich ist.

Aufgabe der vorliegenden Erfindung ist daher, eine kompakte, wartungsarme sowie leichte Ausführung des sog. Maschinensatzes, des Turmaufsatzes aus Getriebe, Rotorlagerung und Generator für eine Windkraftanlage der Megawatt-Klasse zu schaffen. Dies wird mit der erfindungsgemäßen Verwendung eines Schiffswellengenerators erreicht.

Weiter wird dadurch erreicht, daß, wie in den Merkmalen des Hauptanspruches beschrieben, die Rotordrehzahl in der Größenordnung von 15 - 20 U/min, das Übersetzungsverhältnis eines einstufigen Getriebes zwischen 5 und 8 beträgt und die Nenn-Drehzahl des Generators zwischen 75 und 150 U/min liegt. Damit läßt sich ein voll gekapselter Generator mit einem leichten, einstufigen wartungsarmen Getriebe kombinieren.

Wenn dann an das Rotorlager über eine Kupplung anschließend sich ein Planetenträger eines Getriebes vor einer Frontplatte des Maschinenträgers befindet, wobei für eine Sonnenradachse des Getriebes ein Durchlaß durch die Frontplatte geschaffen ist, können sehr kurze leichte Anlagen geschaffen werden, die einfach vollständig gekapselt werden können.

Weiter wird vorgeschlagen, das Rotorlager direkt in dem Planetenträger zu lagern, so daß sich noch besonders günstige geometrische Verhältnisse für die Übertragung der Querbelastungen ergeben.

Allen Maßnahmen gemein ist, daß dadurch der Einsatz bereits vorhandener, sehr zuverlässiger Elemente von Generatoren für Schiffe realisiert wird. Durch die beim langsamen Laufen erzeugten tiefen Frequenzen, die hieraus resultierende Schallentkopplung und die vollständig mögliche Kapselung handelt es sich um sehr leise Anlagen. Fettschmierung für das Getriebe ist möglich, es ergeben sich geringe Wärmeprobleme und aufgrund der langsameren Bewegung der laufenden Teile weniger Verschleiß und geringere Abdichtungsprobleme, insgesamt höhere Zuverlässigkeit und Einsatzzeit.

Durch ein einstufiges Planetengetriebe wird dann die Drehzahl des Rotors so weit heraufgesetzt, daß Generatoren eingesetzt werden, wie sie in Schiffen als Wellengenerator üblich sind.

Insbesondere wird vorgeschlagen, das Sonnenrad des Getriebes durch die verstärkte Frontplatte eines Maschinenträgers hindurchragen zu lassen und auf dem so entstandenen Achsstummel über eine Kupplungsscheibe die Innentrommel eines Polradträgers zu lagern. Außer auf der Kupplungsscheibe wird dabei die Innentrommel auf einem Ansatzstutzen gelagert, der mit der Innenseite der Frontplatte des Maschinenträgers fest verbunden ist.

Dadurch ergibt sich ein insgesamt sehr kompakter Aufbau, dessen Schwerpunkt günstigerweise vor der Mittelachse des Turms liegt. Durch Verwendung einer Dreipunktlagerung wird erreicht, daß die Getriebe-Generator-Kombination direkt unter Verzicht auf weitere schwere Zwischenteile auf dem Turmflansch drehbar lagert.

Der notwendige Azimutantrieb wird seitlich oder gegenüberliegend bevorzugt außen auf das Azimutlager wirkend vorgesehen.

Weitere Merkmale und Vorteile der Erfindung ergeben sich aus nachfolgender Beschreibung bevorzugter Ausführungsbeispiele anhand der beigefügten Zeichnungen. Dabei zeigt:
- Fig. 1: einen Schnitt durch eine Getriebe-Generator-Kombination für Windkraftanlagen ohne die erfindungsgemäß vorgeschlagene Drei-Punkt-Lagerung,
- Fig. 2: einen Schnitt durch eine Getriebe-Generator-Kombination ohne Drei-Punkt-Lagerung,
- Fig. 3: eine Schnittdarstellung ohne die erfindungsgemäße Verkapselung durch ein Gehäuse, und
- Fig. 4: nur schematisch die vorgeschlagene Drei-Punkt-Lagerung in einer Ansicht von oben.

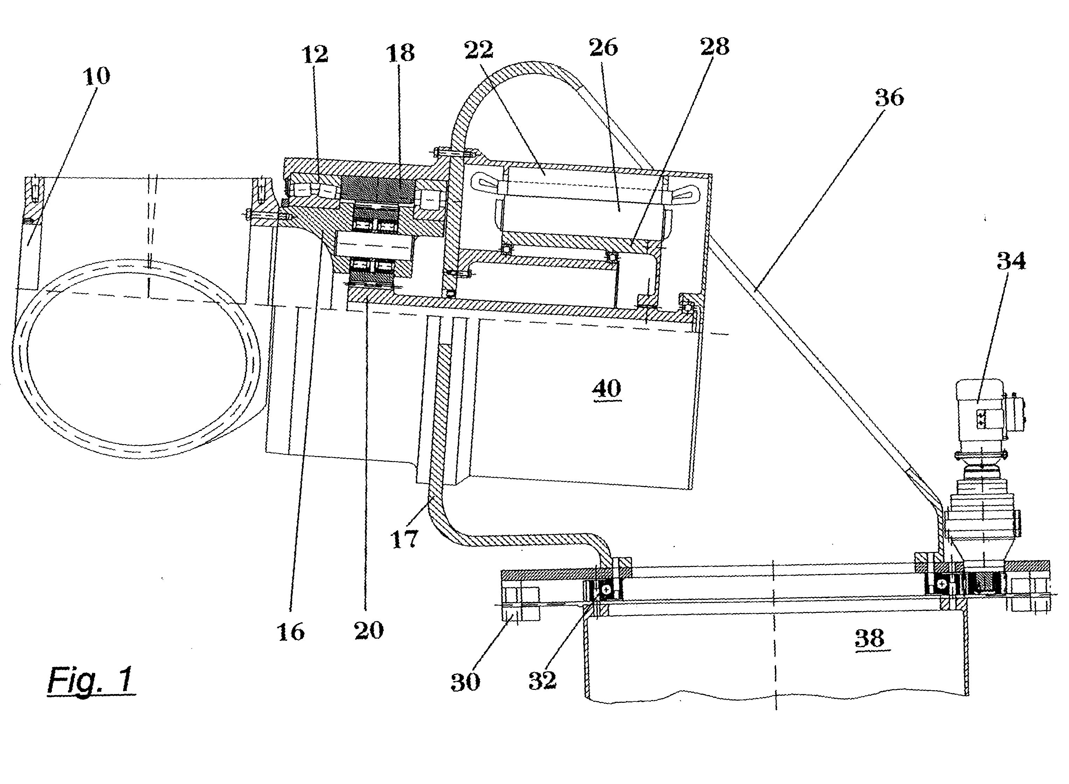

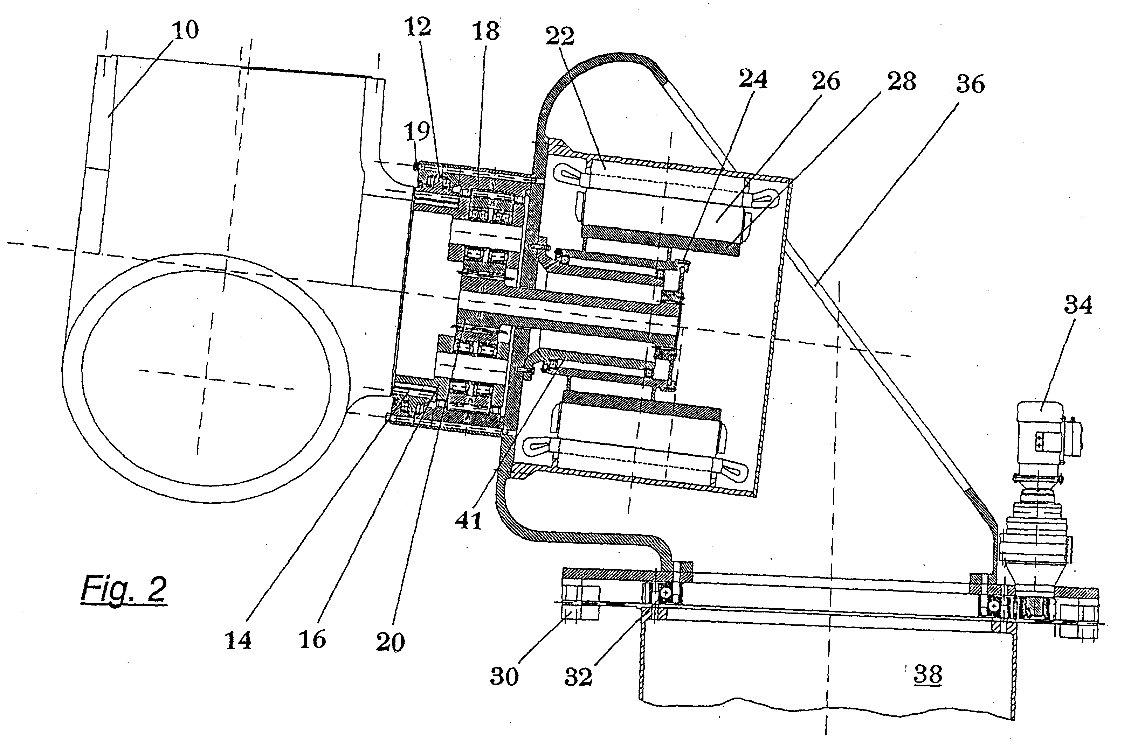

Die in den Fig. 1 und 2 dargestellte Getriebe-Generator-Kombination weist eine im teilweisen Schnitt dargestellte Rotornabe 10 auf. Kreisförmig ist ein Anschluß-Durchmesser für ein Rotorblatt angedeutet.

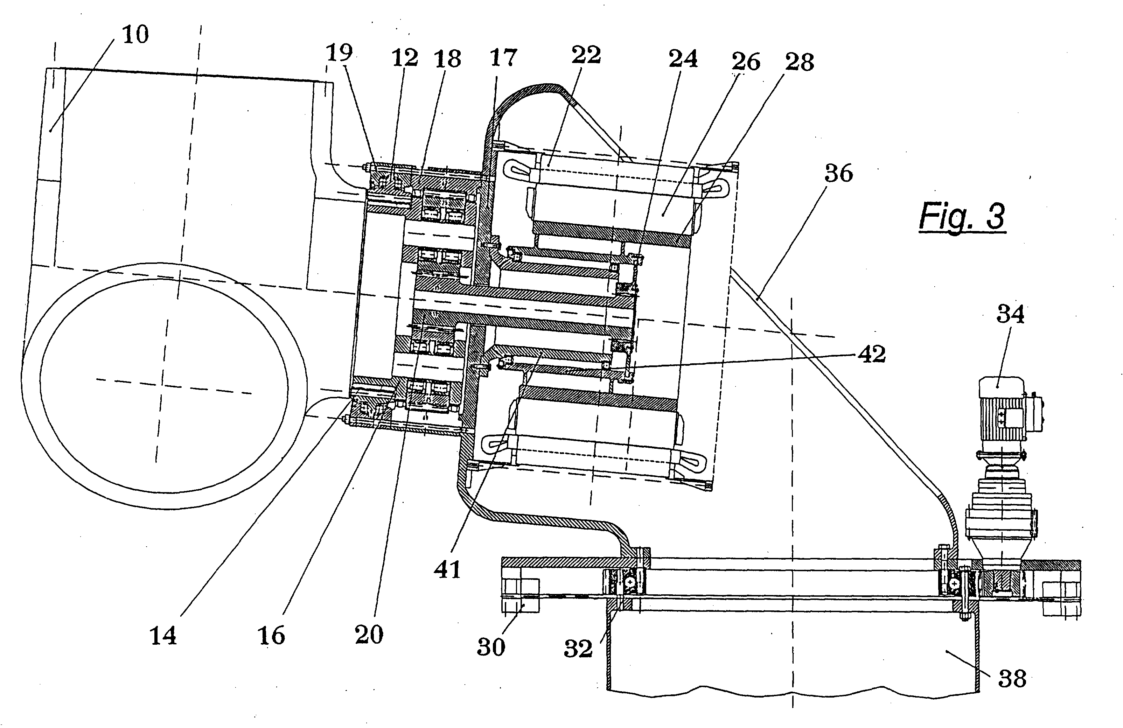

In den beiden Figuren, wie auch in der Fig. 3 ist weiter an die Rotornabe 10 anschließend eine Bogenzahnkupplung 14 als dunkelschraffierter Bereich angedeutet. Daran anschließend ist das Rotorlager 12 vorgesehen, während sich im Inneren der Planetenträger 16 an die Bogenzahnkupplung 14 anschließt.

Das Hohlrad 18 eines Getriebes befindet sich außen, mit Bolzen 19 am Maschinenträger 36 gesichert, um den Planetenträger und das innenliegende Sonnenrad 20 herum, fluchtend mit dem Gegenlager des Rotorlagers. Die Bolzen 19 gehen sowohl durch den Außenring des Rotorlagers als auch durch das Hohlrad 18 hindurch. Das Sonnenrad 20 schließlich ist als Achse durch die Frontplatte 17 des Maschinenträgers hindurchragend ausgebildet.

Auf der Innenseite der Frontplatte 17 ragt die Achse des Sonnenrades 20 über einen Ansatzstutzen 41 hinaus, der als Lagerung für den Innenring 42 des Polträgers 28 dient. Zwischen der Sonnenradachse und dem Innenring 42 befindet sich eine Kupplungsscheibe 24, die zusammen mit ihrem Gegenstück eine Rutschkupplung bildet. Dadurch werden die hohen Stoßkurzschlußmomente des Generators, die in Schadensfällen auftreten können, zuverlässig von dem Getriebe ferngehalten.

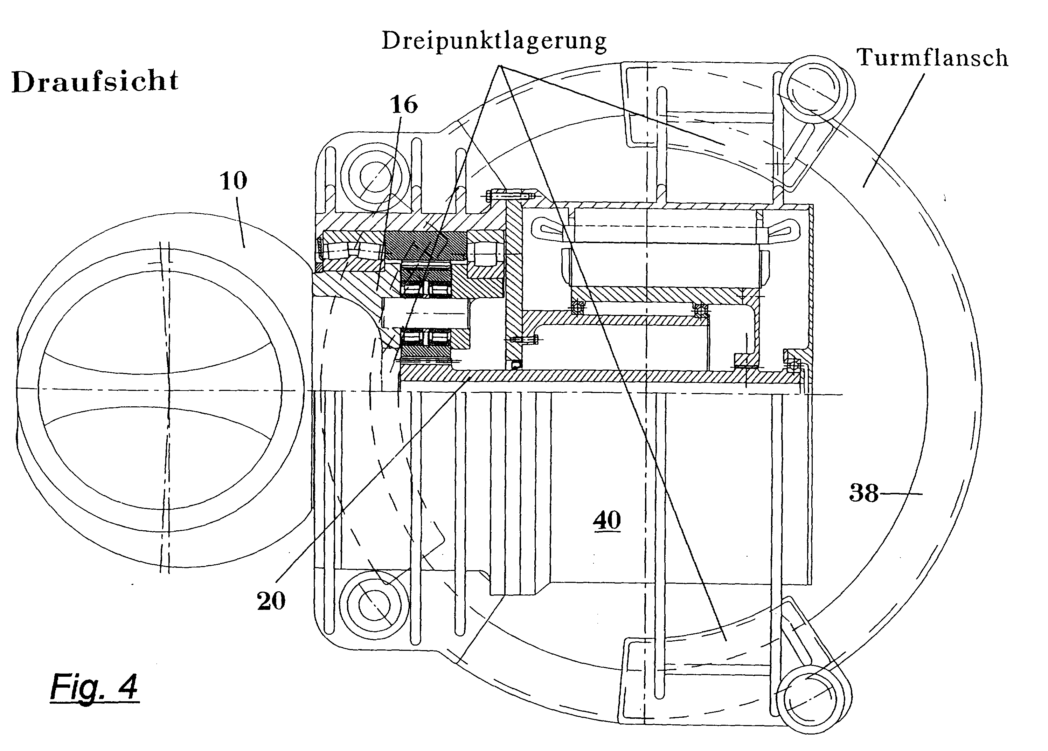

Außen auf dem Polradträger 28 sind die Polschuhe 26 aufgebracht, die dem Ankerblechpaket 22 gegenüberstehen. Der Maschinenträger 36 verläuft in seiner tragenden Konstruktion schräg von der Oberseite der Frontplatte 17 herab bis zu dem Azimutlager 32, um den der Maschinenträger 36 mit Hilfe eines Azimutantriebs 34 dem Wind nachgeführt wird. Innerhalb des Maschinenträgers und außerhalb wird eine Kapselung mit einem Gehäuse 40 vorgeschlagen. Dieses Gehäuse kann dann auch, wie in der Fig. 4 dargestellt zur Abstützung der distalen Enden des Generators bei einer Drei-Punkt-Lagerung Verwendung finden.

Mit Bezugszeichen 30 sind jeweils die Azimutbremsen, mit Bezugszeichen 38 der Turm der Windkraftanlage dargestellt.

## Patentansprüche

1. Verwendung eines Schiffswellengenerators in einer Windkraftanlage des Megawatt-Bereichs, bei der
- das Rotorlager (12) des Rotors der Windkraftanlage in dem Planetenträger (16) eines einstufigen Planetengetriebes in einem Maschinenträger (36) der Windkraftanlage gelagert ist, und
- das einstufige Planetengetriebe im Bereich der Frontplatte (17) des Maschinenträgers (36) der Windkraftanlage gelagert ist,
- eine Drei-Punkt-Lagerung für den Maschinenträger (36), der die Kombination des Schiffswellengenerators mit dem einstufigen Planetengetriebe enthält, vorgesehen ist,
wobei das Ankerblechpaket (22) des Schiffswellengenerators fest mit dem Maschinenträger (36) verbunden ist,
wobei die Kombination des Schiffswellengenerators mit dem einstufigen Planetengetriebe direkt auf dem Turmflansch drehbar gelagert ist,
wobei die Rotordrehzahl in der Größenordnung 15 bis 20 U/min, das Übersetzungsverhältnis des einstufigen Getriebes zwischen 5 und 8 und die Drehzahl des Generators zwischen 75 und 160 Umdrehungen pro Minute liegen.

2. Verwendung eines Schiffswellengenerators nach Anspruch 1, dadurch gekennzeichnet, daß zwischen Rotorlager und Planetenträger (16) eine Bogenzahnkupplung vorgesehen ist.

## Claims

1. Use of a propelling shaft generator in a wind power plant in the megawatt range, in which
- the bearing (12) of the rotor of the wind power plant is mounted in the planet carrier (16) of a single-stage planetary gear in a machine carrier (36) of the wind power plant and
- the single-stage planetary gear is mounted in the vicinity of the front panel (17) of the machine carrier (36) of the wind power plant,
- a three-point bearing for the machine carrier (36) is provided, which contains the combination of the propelling shaft generator and the single-stage planetary gear,
in which the armature laminations (22) of the propelling shaft generator is firmly connected to the machine carrier (36),
in which the combination of the propelling shaft generator with the single-stage planetary gear is mounted in rotary manner directly on the tower flange, the rotor speed being approximately 15 to 20 r.p.m., the transmission ratio of the single-stage gear between 5 and 8 and the generator speed between 75 and 160 r.p.m.

2. Use of a propelling shaft generator according to claim 1, characterized in that a curved tooth clutch is provided between the rotor bearing and the planet carrier (16).

## Revendications

1. Utilisation d'une génératrice d'arbre de navire dans une éolienne de l'ordre du mégawatt, dans laquelle
- le palier (12) du rotor de l'éolienne est monté dans le châssis (16) d'un train planétaire à un étage dans un support de machine (36) de l'éolienne, et
- le train planétaire à un étage est monté dans la zone de la plaque avant (17) du support de machine (36) de l'éolienne,
- il est prévu un appui trois points pour le support de machine (36), qui contient la combinaison de la génératrice d'arbre de navire avec le train planétaire à un étage, le paquet de tôles d'induit (22) de la génératrice d'arbre de navire étant fixé au support de machine (36),
la combinaison de la génératrice d'arbre de navire avec le train planétaire à un étage étant montée tournante directement sur la bride de la tour,
la vitesse de rotation du rotor étant de l'ordre de 15 à 20 tr/mn, le rapport de transmission du train à un étage étant compris entre 5 et 8 et la vitesse de rotation de la génératrice étant comprise entre 75 et 160 tr/mn.

2. Utilisation d'une génératrice d'arbre de navire selon la revendication 1, caractérisée par le fait qu'entre le palier du rotor et le châssis (16) du train planétaire est prévu un accouplement à dents courbes.
